# NEUE EUROPÄISCHE PATENTSCHRIFT

(11) **EP 0 630 554 B2**
(45) Veröffentlichungstag und Bekanntmachung des Hinweises auf die Entscheidung über den Einspruch: **09.07.2003**
(45) Hinweis auf die Patenterteilung: 29.12.1997
(21) Anmeldenummer: 94108349.5
(22) Anmeldetag: 31.05.1994
(51) Int. Cl.: A01B 73/00, A01D 78/10

(54) **Frei schwenkbare Nachlaufräder für landwirtschaftliche Arbeitsmaschinen, insbesondere Kreiselheumaschinen**
Castor wheel for agricultural implements, especially rotary hay tedders
Roue à pivot pour machines agricoles, notamment faneuses

(30) Priorität: 25.06.1993 DE 4321128
(43) Veröffentlichungstag der Anmeldung: 28.12.1994
(73) Patentinhaber: CLAAS Saulgau GmbH, 88340 Bad Saulgau (DE)
(72) Erfinder: Reber, Erwin, D-88348 Saulgau (DE); Deni, Franz, D-88348 Saulgau-Bogenweiler (DE)
(74) Vertreter: Roth, Klaus

(56) Entgegenhaltungen:
- EP-A- 0 332 835
- DE-C- 817 051
- DE-C- 4 013 789
- US-A- 5 054 560
- Auto Encyclopedie H.J.Peppink and B.D.Swanenburg, 1956, Seiten 248-250, Figuren 3,4 und 6

## Beschreibung

Die Erfindung bezieht sich auf eine Anordnung von frei schwenkbaren Nachlaufrädern für landwirtschaftliche Arbeitsmaschinen.

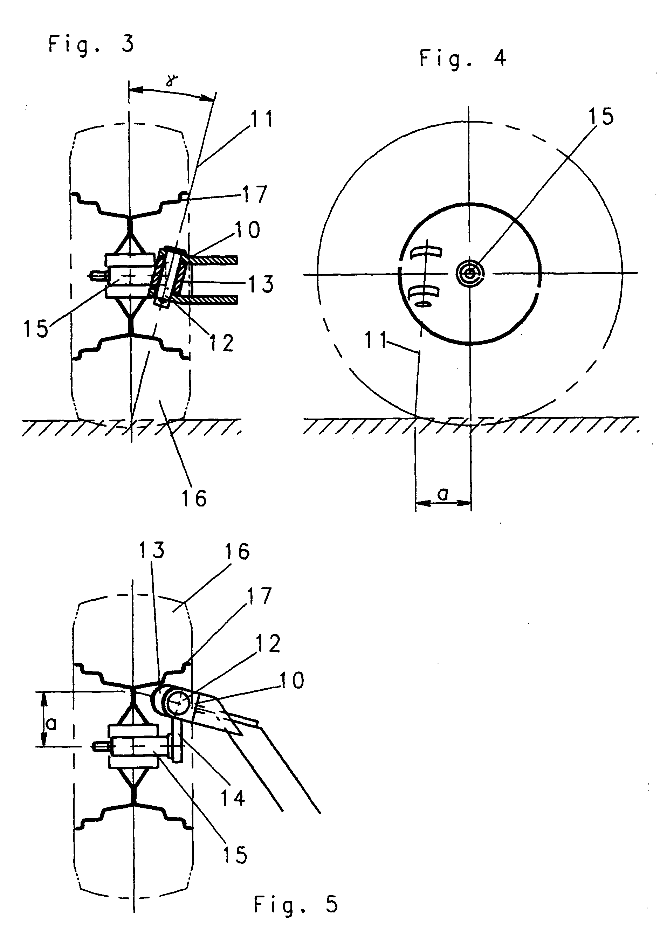

Solche Nachlaufräder sind zum Beispiel aus der EF-A 033 28 35 (Figuren 3 und 4) bekannt. Hier wird eine Anordnung mit frei schwenkbaren Nachlaufrädern für Kreiselheumaschinen beschrieben, bei der das vordere Laufrad zweier an einer Rendelachse aufgehängter Laufräder als Nachlaufrad mit senkrechter Schwenkachse und etwa horizontaler Radachse vorgesehen ist. Die gedachte Veslängerung der Schwenkachse durch sticht dabei den Erdboden vor dem Nachlaufrad in etwa in dessen Mittelebene. Sie werden verwendet, um der Arbeitsmaschine bei der Kurvenfahrt einen kinematisch zwanglosen Lauf hinter dem ziehenden Schlepper zu erlauben. Ihr Nachteil liegt jedoch darin, daß die Schwenkachse für die Nachlaufräder den Raddurchmesser in der Höhe erheblich überragt, so daß in dem unter dem umlaufenden Arbeitswerkzeug verfügbaren Bauraum nur Räder verhältnismäßig kleinen Durchmessers untergebracht werden können. Um diesen Nachteil auszugleichen, ist schon vorgeschlagen worden, als Nachlaufräder Doppelräder anzuwenden, wie z. B. in der DE-C 40 13 789 gezeigt.

Die Erfindung bezweckt, den geschilderten Nachteil einfach, funktionsgerecht und kostengünstig zu vermeiden. Zu diesem Zweck wird die Anordnung mit den Merkmalen des Anspruchs 1 vorgeschlagen.

Bei dieser Anordnung wird das Anheben bzw. Absenken der Schwenkachsen beim Verschwenken der Nachlaufräder ausgeglichen.

Es hat sich gezeigt, daß es für die Raumausnutzung und die Laufruhe besonders vorteilhaft ist, wenn die Neigung der Schwenkachsen zu den Mittelebenen der Nachlaufräder etwa 15 ° beträgt.

Die Erfindung wird anhand von 8 Abbildungen beispielsweise erläutert.
- Figur 1: zeigt eine Kreiselheumaschine mit 4 Nachlaufrädern in Seitenansicht.
- Figur 2: zeigt das Fahrwerk der gleichen Maschine in Draufsicht.
- Figur 3: zeigt ein Nachlaufrad in Ansicht von hinten.
- Figur 4: zeigt den gleichen Gegenstand in Seitenansicht.
- Figur 5: zeigt den gleichen Gegenstand in Draufsicht.
- Figuren 6 bis 8: zeigen ein anders gelagertes Nachlaufrad in den entsprechenden Ansichten.

Eine Kreiselheumaschine mit einem Maschinenrahmen (1) ist um eine senkrechte Schwenkachse (2) schwenkbar mit einem Anbaurahmen (3) verbunden, der seinerseits an einen nicht dargestellten Schlepper angebaut ist. Am Maschinenrahmen (1) ist ein Arbeitskreisel (4) um eine senkrechte Achse (5) drehbar und antreibbar gelagert. Mit dem Maschinenrahmen (1) sind Achsträger (6) fest verbunden. An den Achsträgern (6) sind Radschwingen (7) höhenbeweglich gelagert. An diesen Radschwingen (7) sind zweiarmige Pendelachsen (8) um eine horizontale Drehachse (9) schwenkbar gelagert. Die zweiarmigen Pendelachsen (8) tragen an ihren freien Enden je eine Achsfaust (10), deren Mittelachse (11) von hinten gesehen derart geneigt ist, daß diese nach unten hin gespreizt ist (Figuren 3 bis 5). Die Bohrung der Achsfaust (10) wird von einem Zapfen (12) durchsetzt. Dieser wird von einer Lagerhülse (13) umschlossen. Die Lagerhülse (13) ist mittels eines Steges (14) fest mit einer Radachse (15) verbunden. Auf der Radachse (15) ist ein Laufrad (16) mit einer Felge (17) drehbar gelagert. Die Mittelachse (11) ist, von der Seite gesehen, auch noch derart geneigt, daß sie, in Fahrtrichtung gesehen, im Abstand a vor der Radmitte den Erdboden trifft (Figur 4).

Der Spreizungswinkel γ ist so gewählt (Figur 3), daß die Mittelachse (11), die gleichzeitig Schwenkachse für das Nachlaufrad (16) ist, den Erdboden in der Mittelebene des Laufrades (16) durchsticht.

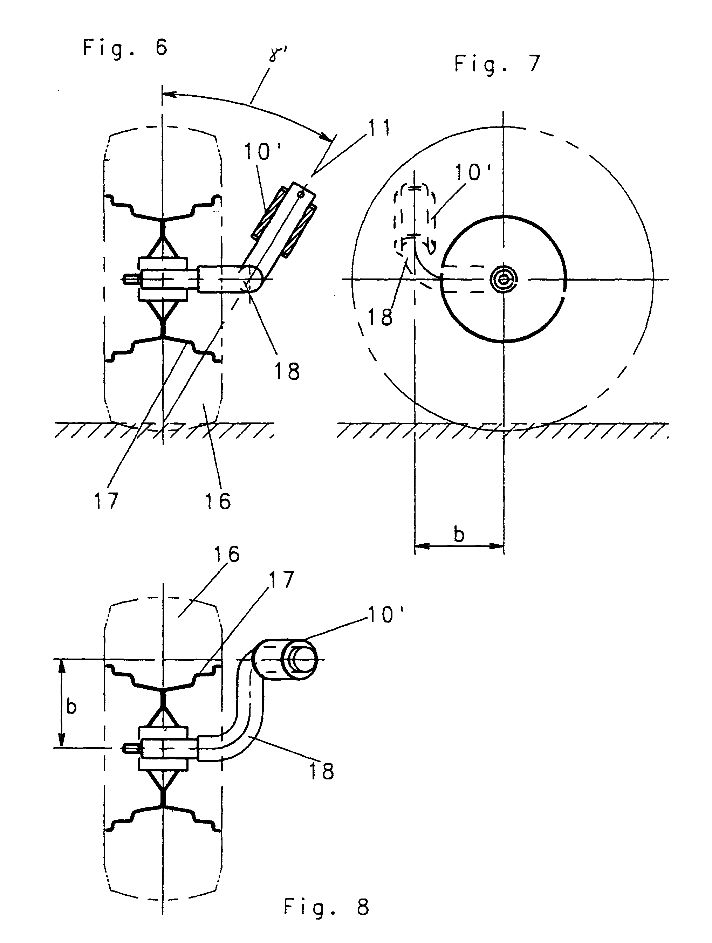

Bei einer anderen Ausführungsform (Figuren 6 bis 8) ist die Achsfaust (10') nur in einer quer zur Fahrtrichtung liegenden Vertikalebene mit einem Spreizungswinkel γ' zur Laufradebene geneigt. Die Achsfaust (10') wird von einer zweifach gekröpften Radachse (18) durchsetzt, auf deren horizontalem Achszapfen wiederum ein Laufrad (16) mit einer Felge (17) drehbar gelagert ist. Bei dieser Anordnung entsteht ein Nachlaufversatz b.

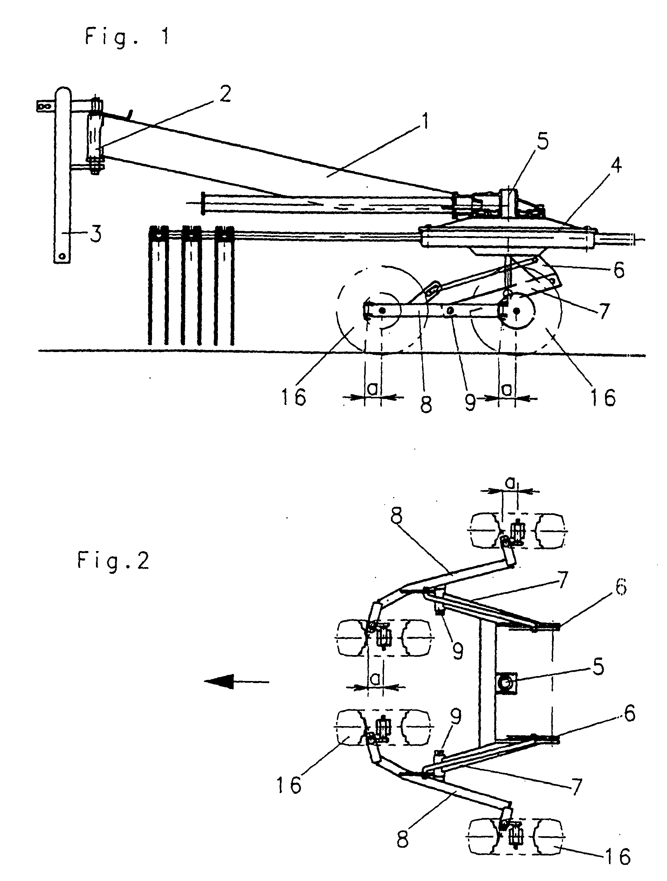

An den zweiarmigen Pendelachsen (8) sind, in Fahrtrichtung gesehen, ein vorderes Nachlaufrad (16) auf der Innenseite und ein hinteres Nachlaufrad (16) auf der Außenseite angeordnet (Figur 2). Da sich bei einer Kurvenfahrt beide Nachlaufräder in der gleichen Richtung verschwenken, hat das, wegen der spiegelbildlichen Spreizung der Schwenkachsen (11) zur Folge, daß die Schwenkachse des einen Rades angehoben und die des anderen Rades abgesenkt wird. Die Folge ist, daß die Drehachse (9) in der Höhe etwa unverändert bleibt und damit auch der Abstand der Arbeitswerkzeuge zum Boden.

## Patentansprüche

1. Anordnung von frei schwenkbaren Nachlaufrädern für landwirtschaftliche Arbeitsmaschinen, insbesondere Kreiselheumaschinen, mit einer zum Erdboden geneigten Schwenkachse (11) und einer etwa horizontalen Radachse (15), wobei die materielle Schwenkachse (10, 12, 13, 14, 10', 18) den Außendurchmesser der Laufräder (16) an keiner Stelle überragt, die gedachte Verlängerung der Schwenkachse (11) den Erdboden etwa in der Mittelebene der Laufräder (16) und, in Fahrtrichtung gesehen vor dem Aufstandspunkt der Laufräder durchsticht, und zwei Nachlaufräder (16) an einer zweiarmigen Pendelachse (8) in Fahrtrichtung mit Abstand zueinander angeordnet sind, wobei die Neigungen γ, γ' der Schwenkachsen (11) beider Nachlaufräder (16) in Fahrtrichtung gesehen, spiegelbildlich zueinander sind.

2. Anordnung nach Anspruch 1, **dadurch gekennzeichnet, daß** die Neigung γ, γ' der Schwenkachsen (11) zur Mittelebene der Laufräder (16) etwa 15° beträgt.

## Claims

1. An arrangement of freely pivotable castor wheels for agricultural implements, in particular rotary hay tedders, having a pivot axis (11) which is inclined relative to the ground and a substantially horizontal wheel axis (15), whereby the material pivot axis (10, 12, 13, 14, 10', 18) does not project at any point beyond the outside diameter of the wheels (16), the notional prolongation of the pivot axis (11) passes through the ground approximately in the central plane of the wheels (16) and, viewed in the direction of travel, in front of the ground-contacting point of the wheels (16), and two castor wheels (16) are arranged on a double-armed swing axle (8) at a spacing relative to each other in the direction of travel, wherein the inclinations y, y' of the pivot axes (11) of both castor wheels (16) are in mirror image relationship with each other as viewed in the direction of travel.

2. An arrangement according to claim 1 **characterised in that** the inclination y, y' of the pivot axes (11) relative to the central plane of the wheels (16) is about 15°.

## Revendications

1. Ensemble de roues oscillantes à pivotement libre pour machines agricoles, notamment des faneuses rotatives, présentant un axe de pivotement (11) incliné au sol, et un axe de roue (15) sensiblement horizontal, l'axe concret de pivotement (10, 12, 13, 14, 10', 18) ne dépassant, en aucun emplacement, du diamètre extérieur des roues de roulement (16); le prolongement imaginaire de l'axe de pivotement (11) croise le sol sensiblement dans le plan médian des roues de roulement (16) et, observé dans la direction du déplacement, devant le point de contact au sol des roues de roulement (16); et deux roues oscillantes (16) sont disposées sur un essieu oscillant (8) à deux bras, à distance l'une de l'autre dans la direction du déplacement, les inclinaisons y, y', des axes de pivotement (11) des deux roues oscillantes (16) étant mutuellement spéculaires observées dans la direction du déplacement.

2. Ensemble selon la revendication 1, **caractérisé par le fait que** l'inclinaison y, y' des axes de pivotement (11) mesure environ 15° par rapport au plan médian des roues de roulement (16).
